# FASCICULE DE BREVET EUROPEEN

(11) **EP 1 497 883 B1**
(45) Date de publication et mention de la délivrance du brevet: **03.12.2008**
(21) Numéro de dépôt: 03747147.1
(22) Date de dépôt: 18.04.2003
(51) Int. Cl.: H01M 8/10, H01M 4/86

(54) **ELEMENT DE BASE DE PILE A COMBUSTIBLE LIMITANT LA TRAVERSEE DE L'ELECTROLYTE PAR LE METHANOL**
BASISELEMENT VON BRENNSTOFFZELLE ZUR REDUCIERUNG DES DURCHGANGES VON METHANOL DURCH ELEKTROLYT
FUEL CELL BASE ELEMENT THAT LIMITS THE METHANOL PASSING THROUGH THE ELECTROLYTE

(30) Priorité: 23.04.2002 FR 0205062
(43) Date de publication de la demande: 19.01.2005
(73) Titulaire: COMMISSARIAT A L'ENERGIE ATOMIQUE, 75015 Paris (FR)
(72) Inventeur: LAURENT, Jean-Yves, F-38640 CLAIX (FR); MARSACQ, Didier, F-38000 GRENOBLE (FR); ROUX, Christel, F-38210 SAINT QUENTIN sur ISERE (FR); NAYOZE, Christine, F-38600 FONTAINE (FR)
(74) Mandataire: Poulin, Gérard
(86) Numéro de dépôt international: PCT/FR2003/001250
(87) Numéro de publication internationale: WO 2003/092092

(56) Documents cités:
- WO-A-01/37357
- WO-A-99/40237
- DE-A- 19 859 765
- DE-C- 19 803 132

## Description

### Domaine de l'invention

L'invention concerne le domaine des piles à combustible du type à membrane échangeuse de protons « PEM » (Proton Exchange Membrane), et en particulier celles de type « DMFC » (Direct Methanol Fuell Cell), utilisant le méthanol ou un autre alcool comme combustible. Il s'agit en particulier des piles à combustible destinées à alimenter des équipements portables, c'est-à-dire légers et très peu encombrants.

### Art antérieur et problème posé

Les piles à combustible utilisent généralement comme combustible l'hydrogène et comme comburant l'oxygène. Or, dans le cas des piles à combustible destinées à alimenter des équipements portables, le volume occupé par le combustible doit être réduit au minimum. Compte tenu du fait que la densité volumique énergétique des combustibles liquides est en général supérieure à celle de l'hydrogène, ceux-ci sont donc choisis comme combustible.

Comme dans les autres piles à combustible, le combustible est destiné à être oxydé catalytiquement à l'anode pour donner des protons, électrons et produits d'oxydation successifs pouvant aboutir au dioxyde de carbone. L'électrolyte, constitué généralement d'une membrane conductrice protonique du type Nafion^{®}, conduit les protons vers la cathode pour réagir avec l'oxygène et former de l'eau. La difficulté majeure de ce type de pile à combustible réside dans la perméation du combustible, à travers la membrane électrolytique pour réagir à la cathode directement avec l'oxygène. Cette réaction a deux conséquences majeures qui sont la création d'une tension mixte à la cathode, abaissant la tension globale de la pile, et une consommation excessive de combustible diminuant l'autonomie de fonctionnement de l'ensemble. En outre, la migration transversale du combustible dans l'électrolyte est pratiquement impossible à éviter, car le conducteur protonique contient un système aqueux pour favoriser le passage des protons et le combustible diffuse très vite dans ce système aqueux, où il est miscible.

La demande internationale WO-01/37357 décrit des piles à combustible ayant un substrat en silicium et dans lequel une barrière étanche en palladium, niobium, tantale ou vanadium est positionnée entre l'anode et la cathode, et étant de préférence, connectée à la cathode. Ce principe est purement physique, c'est-à-dire que ce film constitue un obstacle au cheminement du méthanol. En outre, ce procédé présente deux inconvénients majeurs qui sont les suivants :
- le ralentissement de la migration des protons causé par une réaction d'absorption/diffusion/désorption dans la membrane métallique ;
- le blocage des mouvements d'eau dans la membrane et, par conséquent, la création de zones plus sèches et donc moins conductrices ioniquement.

Le but de l'invention est de remédier à ces inconvénients et de présenter un concept différent pour empêcher le méthanol de traverser la couche d'électrolyte jusqu'à la cathode, tout en ayant pour souci d'augmenter le rendement de la pile en utilisant le méthanol présent dans l'électrolyte.

### Résumé de l'invention

A cet effet, l'objet principal de l'invention est un élément de base de pile à combustible comprenant un électrolyte entre une cathode et une anode.

Selon l'invention, l'anode comprend une partie interne placée de façon noyée dans l'électrolyte et reliée électriquement à une partie externe.

De préférence, l'électrolyte se trouve sous forme de film ou sous forme de couche.

Cette partie interne peut être constituée de plusieurs couches de matériaux différents.

Elle est, de préférence, parallèle à la partie externe.

La partie interne peut également être constituée d'au moins une mousse.

La partie interne peut être réalisée, de préférence, sous la forme d'une ou de plusieurs grilles.

Dans une réalisation préférentielle de l'élément de base selon l'invention, le combustible est un alcool, de préférence, choisi parmi l'éthanol, le méthanol et l'éthylène glycol.

### Liste des figures

L'invention et ses différentes caractéristiques seront mieux comprises à la lecture de la description suivante, accompagnée de deux figures qui représentent respectivement :
- figure 1, en coupe, le principe général de l'élément de base selon l'invention ; et
- figure 2, en coupe partielle, une réalisation particulière de l'élément de base selon l'invention.

### Description détaillée d'une réalisation de l'invention

La manière d'aboutir à l'objectif, ci-dessus énoncé, consiste toujours à faire réagir le combustible, dans l'électrolyte avant qu'il ne parvienne à la cathode.

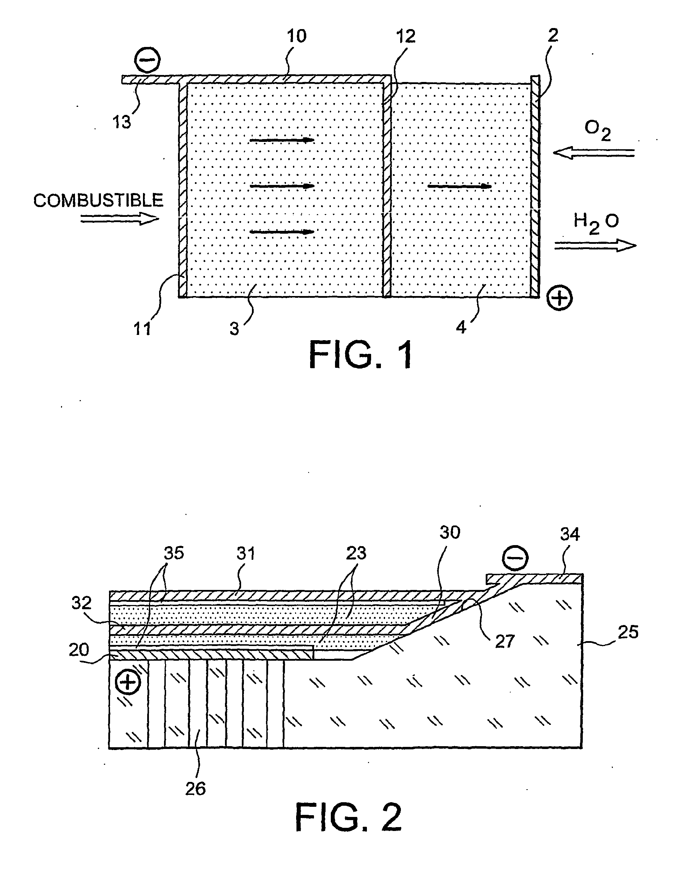

La figure 1 représente, en coupe, une portion de l'élément de base, qui illustre bien le principe utilisé. L'électrolyte, référencé 3 et 4, occupe la majeure partie de l'élément. D'un côté, c'est-à-dire à droite, se trouve, sur la surface externe d'une partie droite de l'électrolyte 4, une cathode positionnée d'une manière conventionnelle. Sur la partie gauche de la surface externe de l'électrolyte 3, se trouve une partie externe 11 de l'anode. Cette dernière est également constituée d'une partie interne 12, parallèle à la partie externe 11, et noyée au milieu de l'électrolyte. Elle est reliée électriquement à la partie externe par une connexion 10. Cet ensemble constitué de la connexion 10, de la partie externe 11 et de la partie interne 12, est relié électriquement par un connecteur 13 à l'extérieur de l'élément. Il est nécessaire de préciser que la partie interne 12 de l'anode n'est pas constituée d'une plaque ou une couche pleine constituant un barrage mécaniquement infranchissable, mais au contraire d'une grille. Celle-ci peut avoir plusieurs formes différentes, les mailles pouvant être rondes, carrées, hexagonales ou autres, permettant le passage des protons et les mouvements d'eau qui équilibrent la teneur en eau de la membrane. L'anode et, en particulier, la grille constituée par la partie interne 12 doit être en un matériau permettant l'oxydation du combustible, tel que le palladium, le platine ou le ruthénium ou autres. Cette partie interne permet donc au combustible, n'ayant pas réagi au niveau de l'anode externe, de réagir à ce niveau, de façon à ce que la quantité de combustible atteignant la cathode soit minimisée.

L'électrolyte peut être n'importe quel polymère conducteur protonique, par exemple le Nafion^{®}. Les électrodes sont de préférence à base de platine. Le combustible peut être un alcool comme, par exemple l'éthanol, le méthanol, l'éthylène glycol.

Les quelques flèches figurant à l'intérieur de l'électrolyte 3 et 4 montrent la migration du combustible de l'anode vers la cathode, et illustrent la limitation du phénomène de migration par la présence de la partie interne de l'anode. Du côté de la cathode 2, se produit la réaction des protons avec l'oxygène, ce qui produit de l'eau.

Sur les figures, une seule partie interne 12 de l'anode est prévue. Néanmoins, il est possible d'envisager plusieurs parties internes 12 reliées électriquement à la partie externe 11.

La figure 2 fait référence partiellement, et en coupe, à une réalisation plus concrète d'un élément de base de pile à combustible, notamment à son procédé de fabrication.

A cet effet, on utilise un substrat en silicium 25 pour supporter l'ensemble. Celui-ci possède, à la gauche de la figure, des canalisations d'alimentation en oxygène 26, perpendiculaires à la surface supérieure et un pan incliné 27. L'ensemble du substrat en silicium 25 forme donc une cuvette à l'intérieur de laquelle doit être fabriqué l'ensemble.

La première phase de fabrication de ce dernier consiste à graver une ou plusieurs cuvettes sur une surface du substrat en silicium 25. La figure 2, qui est une coupe, montre la forme du bord d'une de ces cuvettes. Ces dernières sont usinées par attaque chimique et plus précisément par une attaque basique, par exemple avec de l'hydroxyde de potassium à chaud.

La deuxième phase consiste à déposer, en phase vapeur, sur le fond de la cuvette du substrat 25, la cathode 20 constituée d'un collecteur métallique. L'épaisseur de la cathode 20 est de l'ordre du micromètre.

La troisième opération consiste à déposer par enduction sur la cathode 20 une couche active 35 destinée à catalyser la réaction de réduction de l'oxygène. Cette couche active 35 est un mélange de graphite platiné et d'un liant en PVDF, c'est-à-dire polyfluorure de vinylidène. Cette couche est épaisse de quelques micromètres.

La quatrième phase consiste à déposer une première partie de l'électrolyte 23 qui doit recouvrir la première couche active 35 jusqu'au bord de la cuvette constituée par le pan incliné 27. L'électrolyte 23 est une solution de Nafion^{®} mis en forme par enduction. Cette couche a une épaisseur de l'ordre de 20 µm. L'étalement peut se faire par centrifugation, suivi d'un séchage. L'électrolyte 23 peut être également constitué d'un des produits suivants: les polyimides, les polyéthersulfones sulfonés, les polystyrènes sulfonés et leurs dérivés sulfonés, les polyéthercétones sulfonés et leurs dérivés sulfonés, les polybenzoxazoles sulfonés, les polybenzimidazoles et leurs dérivés, les polyarylènes tels que les paraphénylènes et polyparaxylylènes et leurs dérivés sulfonés. Il peut être déposé sous la forme d'un film.

L'étape suivante consiste à déposer la partie interne 32 de l'anode, qui est, sur cet exemple, constituée d'une seule couche non étanche, mais peut être constituée de plusieurs couches de matériaux différents. Elle est déposée en phase vapeur (PVD). Ce dépôt se fait sous une pression de 3 mbar en plasma d'argon avec un masquage mécanique pour réaliser la grille. Cette partie interne 32 de l'anode se poursuit sur le côté de la cuvette, plus exactement sur le pan incliné 27, par un prolongement de platine, obtenu par le même dépôt, constituant une connexion électrique 30 avec la partie externe 31 constituant également l'anode. Ceci permet d'obtenir une homogénéité électrique de toute l'anode.

L'étape suivante consiste à déposer la deuxième partie de l'électrolyte 23 de la même manière que la première partie.

L'étape suivante est le dépôt par enduction de la couche active 35 côté anode constituée de carbone platiné, mélange à du Nafion^{®}. Puis la partie externe 31 de- L'anode est obtenue par pulvérisation cathodique plasma. Elle se prolonge jusqu'au bord de la cuvette, c'est-à-dire jusqu'à la connexion 30. A l'extérieur de l'ensemble, cette couche se prolonge pour constituer un connecteur 34, déposé en phase vapeur, de la même manière que la partie interne 32 de l'anode. La forme en cuvette du substrat 25 permet ainsi de relier ensemble deux couches anodiques constituées par la partie externe 31 et la partie interne 32 et à constituer la connexion 30.

Dans l'exemple représenté sur la figure 2, une seule partie interne 32 a été représentée. Il est très possible d'envisager que plusieurs parties internes successives soient intercalées dans une couche d'électrolyte plus important.

Les dépôts des différentes couches peuvent également être réalisés par dépôt en phase vapeur, par voie chimique, par pulvérisation, par enduction, par trempage ou dépôt par centrifugation.

Cette invention s'applique en particulier à des systèmes de piles à combustible fonctionnant avec, comme combustible, du méthanol ou avec un autre combustible liquide ou gazeux susceptible de migrer au travers de l'électrolyte utilisé. Elle pourrait aussi s'appliquer aux piles utilisant l'hydrogène, comme combustible, dans le cas de membranes très fines, ayant une perméabilité aux gaz trop importante.

## Revendications

1. Elément de base de pile à combustible comprenant, un électrolyte (3, 23) entre une anode et une cathode :
**caractérisé en ce que** l'anode comprend une partie interne (12, 32) placée de façon noyée dans l'électrolyte (3, 23) et reliée électriquement à une partie externe (11, 31) en contact d'un seul côté avec l'électrolyte (23).

2. Elément de base de pile à combustible selon la revendication 1, **caractérisé en ce que** l'électrolyte (3, 23) se trouve sous la forme d'un film.

3. Elément de base de pile à combustible selon la revendication 1, **caractérisé en ce que** l'électrolyte (3, 23) se trouve sous la forme d'une couche.

4. Elément de base de pile à combustible selon la revendication 1, **caractérisé en ce que** la partie interne (12, 32) est sensiblement parallèle à la partie externe (31) de l'anode.

5. Elément de base de pile à combustible selon la revendication 1 ou 4, **caractérisé en ce que** la partie interne (32) est constituée d'au moins une grille.

6. Elément de base de pile à combustible selon la revendication 1, **caractérisé en ce que** la partie interne (12, 32) est constituée d'au moins une mousse.

7. Elément de base de pile à combustible selon l'une des revendications précédentes, **caractérisé en ce que** la partie interne (32) est constituée de plusieurs couches de matériaux différents.

8. Elément de base selon la revendication 1, **caractérisé en ce que** le combustible est un alcool.

9. Elément de base selon la revendication 8, **caractérisé en ce que** l'alcool est choisi parmi l'éthanol, le méthanol et l'éthylène glycol.

## Claims

1. Basic fuel cell element comprising an electrolyte (3, 23) between an anode and a cathode:
**characterized in that** the anode comprises an internal part (12, 32) embedded in the electrolyte (3, 23) and electrically connected to an external part (11, 31) in contact on one side only with the electrolyte (23).

2. Basic fuel cell element according to claim 1, **characterized in that** the electrolyte (3, 23) is in the form of a film.

3. Basic fuel cell element according to claim 1, **characterized in that** the electrolyte (3, 23) is in the form of a coat.

4. Basic fuel cell element according to claim 1, **characterized in that** the internal part (12, 32) is preferably parallel to the external part (31) of the anode.

5. Basic fuel cell element according to claim 1 or 4, **characterized in that** the internal part (32) is composed of at least one grid.

6. Basic fuel cell element according to claim 1, **characterized in that** the internal part (12, 32) is composed of at least one foam.

7. Basic fuel cell element according to one of the previous claims, **characterized in that** the internal part (32) is composed of several layers of different materials.

8. Basic element according to claim 1, **characterized in that** the fuel is an alcohol.

9. Basic element according to claim 8, **characterized in that** the alcohol is chosen from among ethanol, methanol and glycol ethylene.

## Patentansprüche

1. Basiselement von Brennstoffzelle, umfassend einen Elektrolyten (3, 23) zwischen einer Anode und einer Kathode:
**dadurch gekennzeichnet, dass** die Anode einen Innenteil (12, 32) umfasst, eingebettet in den Elektrolyten (3, 23) und elektrisch verbunden mit einem Außenteil (11, 31), der nur auf einer Seite mit dem Elektrolyten (23) Kontakt hat.

2. Basiselement von Brennstoffzelle nach Anspruch 1, **dadurch gekennzeichnet, dass** der Elektrolyt (3, 23) die Form eines Films aufweist.

3. Basiselement von Brennstoffzelle nach Anspruch 1, **dadurch gekennzeichnet, dass** der Elektrolyt (3, 23) die Form einer Schicht aufweist.

4. Basiselement von Brennstoffzelle nach Anspruch 1, **dadurch gekennzeichnet, dass** der Innenteil (12, 32) im Wesentlichen parallel ist zu dem Außenteil (31) der Anode.

5. Basiselement von Brennstoffzelle nach Anspruch 1 oder 4, **dadurch gekennzeichnet, dass** der Innenteil (32) durch wenigstens ein Gitter gebildet wird.

6. Basiselement von Brennstoffzelle nach Anspruch 1, **dadurch gekennzeichnet, dass** der Innenteil (12, 32) durch wenigstens einen Schaum gebildet wird.

7. Basiselement von Brennstoffzelle nach einem der vorangehenden Ansprüche, **dadurch gekennzeichnet, dass** der Innenteil (32) durch mehrere Schichten aus verschiedenen Materialien gebildet wird.

8. Basiselement nach Anspruch 1, **dadurch gekennzeichnet, dass** der Brennstoff ein Alkohol ist.

9. Basiselement nach Anspruch 8, **dadurch gekennzeichnet, dass** der Alkohol ausgewählt wird unter Ethanol, Methanol und Ethylenglykol.
